# FASCICULE DE BREVET EUROPEEN

(11) **EP 2 070 459 B1**
(45) Date de publication et mention de la délivrance du brevet: **03.11.2010**
(21) Numéro de dépôt: 08170580.8
(22) Date de dépôt: 03.12.2008
(51) Int. Cl.: A47J 37/06

(54) **Moule pour réaliser un aliment à base d'une pâte se gonflant sous la chaleur**
Form zur Herstellung eines Lebensmittels auf der Basis von Teig, der unter Hitze aufgeht
Mould for making a food product consisting of a dough that inflates when heated

(30) Priorité: 10.12.2007 FR 0759702
(43) Date de publication de la demande: 17.06.2009
(73) Titulaire: SEB S.A., 69132 Ecully Cedex (FR)
(72) Inventeur: Lubowicki, Jean-Pierre, 74540, Gruffy (FR); Touchard, Rodolphe, 74150, Rumilly (FR)
(74) Mandataire: Lemoine, Jean-Sébastien

(56) Documents cités:
- BE-A- 483 329
- DE-A1- 2 832 088
- FR-A- 2 877 545
- US-A- 5 937 742
- US-A1- 2006 201 333

## Description

La présente invention concerne un moule pour réaliser un aliment à base d'une pâte se gonflant sous la chaleur, c'est-à-dire, principalement un gaufrier, et accessoirement, un moule à beignets.

On connaît un tel moule du type comportant deux sous-ensembles de cuisson mobiles l'un par rapport à l'autre entre une position ouverte permettant le dépôt de la pâte et le retrait de l'aliment cuit, et une position fermée dans laquelle ils définissent une chambre de cuisson, chaque sous-ensemble de cuisson comprenant une plaque de cuisson qui donne sa forme à l'aliment obtenu par cuisson de la pâte, la plaque inférieure de cuisson comportant une paroi périphérique qui délimite périphériquement la chambre de cuisson et qui s'étend verticalement au-delà du plan médian de cette chambre.

Une telle paroi périphérique a pour fonction d'empêcher le débordement de la pâte quand elle est déposée en une quantité excessive. Or, il s'avère que la pression exercée par l'expansion de la pâte et par la vapeur générée par la cuisson de cette dernière entraîne malgré tout un débordement, et ceci est favorisé par le fait que la vapeur a tendance à s'accumuler dans la partie haute de la chambre de cuisson, empêchant ainsi la pâte d'occuper cette place et la forçant à s'échapper, ce qui a pour conséquence d'avoir un aliment mal formé (face supérieure pauvre en pâte). Le débordement s'effectue sur l'ensemble de la périphérie du moule ce qui présente un défaut esthétique certain, et cet excès de pâte, à la longue, cuit sur place (non seulement sur la plaque de cuisson qui est traditionnellement revêtue d'un matériau anti-adhésif, mais également sur la coque), ce qui nécessite un nettoyage supplémentaire fastidieux.

La présente invention vise à réaliser un moule ne présentant pas les inconvénients précités.

Le document FR 2 877 545 A décrit un moule selon l'art antérieur.

Selon l'invention, le moule est comme décrit dans la revendication 1.

Ainsi, selon l'invention, le débordement de la pâte est contrôlé : du fait de la présence de l'abaissement, la pâte ne s'échappe de la chambre de cuisson uniquement par cette ouverture. Il est ainsi possible de choisir l'endroit où s'effectuera le débordement et donc, d'atténuer l'impact visuel, de faciliter le nettoyage en cet endroit en déposant un revêtement anti-adhésif...

D'autres particularités et avantages de la présente invention apparaîtront dans la description d'une mode de réalisation donné à titre d'exemple non limitatif et illustré par les dessins mis en annexe dans lesquels :
- La figure 1 est une vue en perspective, de haut, d'un gaufrier ouvert, et
- La figure 2 est une vue en coupe de la partie arrière du gaufrier de la figure 1, fermé.

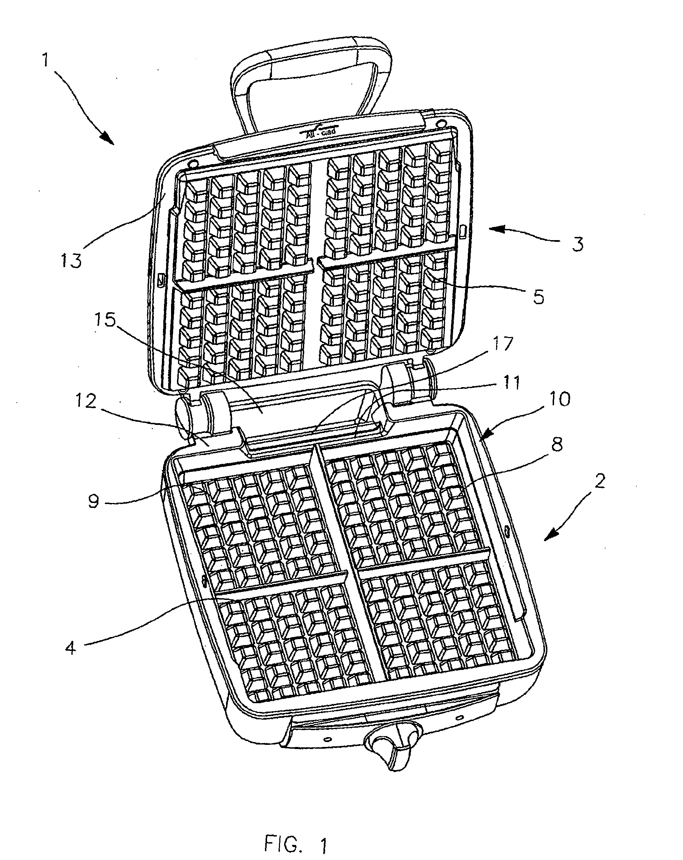

Comme on peut le voir à la figure 1, un moule 1 pour réaliser un aliment à base d'une pâte se gonflant sous la chaleur (en l'occurrence un gaufrier 1) comporte deux sous-ensembles de cuisson 2,3 mobiles l'un par rapport à l'autre : un sous-ensemble inférieur 2 et un sous-ensemble supérieur 3. Les deux sous-ensembles de cuisson 2,3 sont articulés par une charnière entre une position ouverte permettant le dépôt de la pâte et le retrait de l'aliment cuit et une position fermée dans laquelle ils définissent une chambre de cuisson.

Chaque sous-ensemble de cuisson 2,3 comprend, d'une part, une plaque de cuisson 4,5 qui cuit la pâte et donne sa forme à l'aliment obtenu par cette cuisson, et, d'autre part, une coque 6,7 qui forme l'enveloppe extérieure du sous-ensemble 2,3 et qui comporte une ouverture dans laquelle est montée la plaque de cuisson 4,5 correspondante. Dans le présent mode de réalisation, du fait de la nature du moule 1, chaque plaque de cuisson 4,5 comprend des dents 8 séparées les unes des autres par des gorges 9.

La plaque inférieure de cuisson 4 comporte une paroi périphérique 10 qui délimite périphériquement la chambre de cuisson, et qui s'étend verticalement au-delà du plan médian de la chambre (plus précisément, au-delà du plan médian de la chambre de cuisson quand les deux sous-ensembles 2,3 sont en position fermée, sans pâte). La paroi périphérique 10 comprend, sur une portion d'évacuation 11, un abaissement formant une ouverture d'évacuation 30 permettant l'évacuation d'un surplus de pâte en expansion, la paroi périphérique abaissée s'étendant au moins jusqu'au plan médian de la chambre de cuisson. Ainsi, la paroi périphérique 10 comprend au moins une (ici, une) portion d'évacuation 11 où elle a une hauteur réduite, et une portion de retenue 12 où elle a sa hauteur normale.

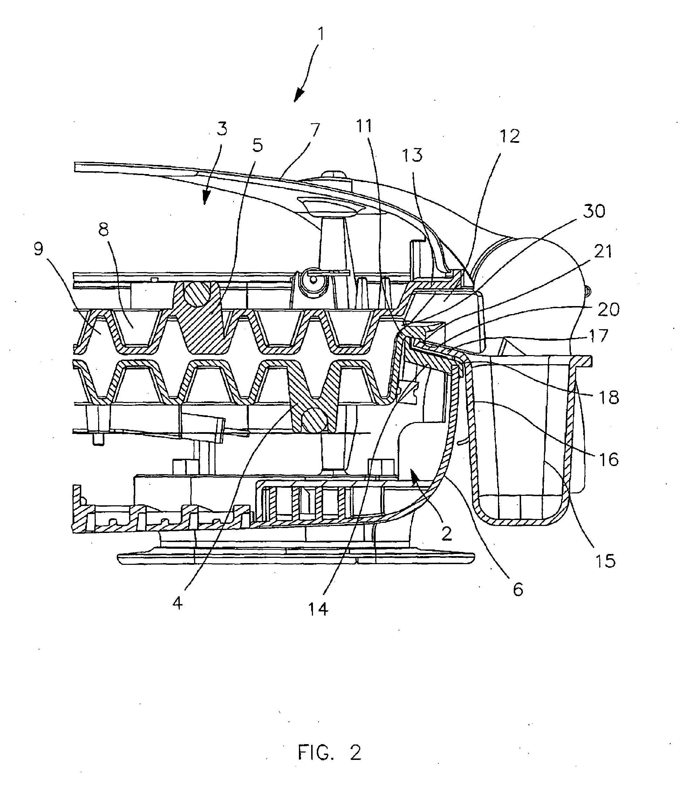

Dans le présent mode de réalisation, comme on peut le voir à la figure 2, la paroi périphérique 10, hors la portion d'évacuation 11 (c'est-à-dire la portion de retenue 12), atteint au moins le niveau du plan de fond de la plaque de cuisson supérieure 5 (quand le moule 1 est dans sa position fermée, sans pâte) ; pour un gaufrier, le plan de fond correspond au plan défini par le fond des gorges 9. En l'occurrence, la plaque supérieure de cuisson 5 comprend un retrait périphérique 13, et la portion de retenue 12 de la paroi périphérique 10 s'étend jusqu'à ce retrait 13 (la position fermée, sans pâte, est définie par le repos du retrait périphérique 13 de la plaque supérieure de cuisson 5 sur la portion de retenue 12 de la paroi périphérique 10 de la plaque inférieure de cuisson 4).

La portion d'évacuation 11 de la paroi périphérique 10, quant à elle, atteint un niveau plus proche du plan de fond de la plaque supérieure de cuisson 5 que du plan médian (quand le moule 1 est dans sa position fermée, sans pâte). En l'occurrence, la portion d'évacuation 11 atteint un niveau égal à au moins la mi-hauteur des dents 8 de la plaque supérieure de cuisson 5.

De ce fait, l'excédent de pâte qui est entraîné hors de la chambre de cuisson, l'est via la portion d'évacuation, ce qui limite considérablement les inconvénients liés aux débordements de pâte. De plus, dans le présent mode de réalisation, étant donné que, de par sa configuration, l'ouverture d'évacuation s'étend verticalement au jusqu'au plan de fond de la plaque supérieure de cuisson 5 (cf. figure 2), la vapeur n'est pas emprisonnée dans la partie haute de la chambre de cuisson, mais au contraire, elle peut librement s'en échapper et donc permettre un très bon remplissage des gorges 9 de la plaque supérieure de cuisson 5.

Pour faciliter l'évacuation de la pâte qui présente une certaine viscosité, il est préférable que la portion d'évacuation 11 soit assez conséquente, entre 10% et 25% de la paroi périphérique 10, et, de préférence, environ un huitième de la paroi périphérique (environ, la moitié d'un côté de la plaque inférieure de cuisson).

Afin de limiter l'impact visuel du débordement, il est préférable que la portion d'évacuation 11 soit située du côté du moule 1 où se trouve l'articulation (ici, la charnière).

Par ailleurs, dans le présent mode de réalisation, alors que la plaque supérieure de cuisson 5 recouvre l'intégralité de la coque supérieure 7 (obstrue l'intégralité de l'ouverture définie par cette coque 7), la plaque inférieure de cuisson 4 recouvre l'intégralité de la coque inférieure 6, sauf au niveau de la portion d'évacuation 11 où une nappe de protection 14, solidaire de la coque 6, assure cette fonction. Cette nappe de protection 14 empêche tout excédent de pâte passant par l'ouverture d'évacuation 11 de pénétrer dans le sous-ensemble inférieur de cuisson 2 (entre la coque 6 et la paroi périphérique 10 qui, dans le présent mode de réalisation, est en retrait dans la chambre de cuisson au niveau de la portion d'évacuation 11).

En outre, afin de récupérer l'excédent de pâte, dans le présent mode de réalisation, le moule 1 comprend un bac de récupération 15 qui est disposé hors de la chambre de cuisson, dans le prolongement de la portion d'évacuation 11. Afin de faciliter l'écoulement de la pâte dans le bac 15 (et donc afin d'éviter l'obstruction de l'ouverture d'évacuation 11), le côté 16 du bac 15 qui est adjacent à la portion d'évacuation 11, est de longueur égale (ou sensiblement égale) à celle de la portion d'évacuation 11. Dans le même but, le bac de récupération 15 comprend un bord de recouvrement 17 qui s'étend depuis le côté 16 adjacent à la portion d'évacuation 11 et qui, atteint la portion d'évacuation 11 de la paroi périphérique 10.

Le bac de récupération 15 est, dans le présent mode de réalisation, séparable du sous-ensemble inférieur de cuisson 2. Il y est fixé par le bord de recouvrement 17. Cette fixation est réalisée par la mise en porte-à-faux du bord de recouvrement 17 entre son appui sur le bord supérieur 18 de la nappe de protection 14 (elle-même en appui sur la coque inférieure 6) et son accrochage sous l'extrémité libre de la portion d'évacuation 11 de la plaque de cuisson 10 (de façon plus précise, l'extrémité libre du bord de recouvrement 17 comprend une rainure d'immobilisation 20 dans laquelle vient se loger un bord tombant 21 de l'extrémité libre de la portion d'évacuation 11). Il est à noter que, quand le bac 15 est solidarisé au sous-ensemble inférieur de cuisson 2, le bord de recouvrement 17 recouvre la nappe de protection 14 (il assure donc la même fonction que cette dernière). En outre, afin de limiter le transfert thermique à la pâte qui est dans le bac de récupération 15, le bord de recouvrement 17 est suffisamment long et est réalisé (comme le reste du bac 15) en un matériau adéquat résistant au transfert thermique (par exemple une matière plastique).

En utilisation, après avoir disposé la pâte sur la plaque inférieure de cuisson 4 et refermer le sous-ensemble supérieur 3, la pâte commence à cuire en s'expansant et laissant s'échapper la vapeur. Du fait de la pression, d'une part l'air et la vapeur s'échappent de la chambre de cuisson via l'ouverture d'évacuation, ce qui permet à la pâte d'occuper la totalité de la chambre de cuisson et donc d'obtenir une gaufre ayant une surface supérieur d'aspect constant et cuite de façon homogène, et, d'autre part, le surplus de la pâte s'échappe également par cette même ouverture, ce qui laisse propre et net le reste du gaufrier. Par ailleurs, étant donné que le bord de recouvrement 17 est froid (du fait de son éloignement des résistances) et est en pente incliné vers le bas en direction du bac de récupération 15, la pâte arrive de façon relativement fluide (et donc sans former d'obstruction) dans ce dernier. Utilement, le volume du bac de récupération 15 pourrait permettre de recueillir un surplus de pâte pour la réalisation de quatre ou cinq gaufres, voire une douzaine.

En outre, l'ouverture d'évacuation est un moyen d'accès d'un outil (par exemple un couteau ou une spatule) pour soulever et déloger l'aliment cuit qui est, si non, difficilement accessible du fait de la hauteur de la portion de retenue de la paroi périphérique.

En fin d'utilisation, le bac est désengagé et nettoyé (ce qui peut être facilité par l'emploi de matériaux adéquats, tels que du plastique). Sa remise en place est elle aussi particulièrement simple par son insertion de haut en bas sous la plaque inférieure de cuisson, son poids assurant sa stabilité.

La présente invention n'est pas limitée au présent mode de réalisation, les moyens de fixation du bac de récupération pourraient être réalisés, par exemple, par encliquetage ou par des crochets. Le bac pourrait aussi avoir une section carré plutôt que rectangulaire, la longueur de l'ouverture étant alors préférablement adaptée. Egalement, la paroi périphérique pourrait comprendre plus d'une portion d'évacuation.

## Revendications

1. Moule (1) pour réaliser un aliment à base d'une pâte se gonflant sous la chaleur, le moule (1) comportant deux sous-ensembles de cuisson (2, 3) mobiles l'un par rapport à l'autre entre une position ouverte permettant le dépôt de la pâte et le retrait de l'aliment cuit et une position fermée dans laquelle ils définissent une chambre de cuisson, chaque sous-ensemble de cuisson (2,3) comprenant une plaque de cuisson (4,5) qui donne sa forme à l'aliment obtenu par cuisson de la pâte, la plaque inférieure de cuisson (4) comportant une paroi périphérique (10) qui délimite périphériquement la chambre de cuisson, qui s'étend verticalement au-dessus du plan médian de cette chambre, et qui comprend, sur une portion d'évacuation (11), un abaissement formant une ouverture d'évacuation permettant l'évacuation d'un surplus de pâte en expansion, **caractérisé en ce que** la portion d'évacuation (11) de la paroi périphérique (10) atteint un niveau plus proche du plan de fond de la plaque supérieure (5) que du plan médian de la chambre de cuisson.

2. Moule (1) selon la revendication 1, **caractérisé en ce que** la portion d'évacuation (11) est située du côté du moule (1) où se trouve l'articulation entre les deux sous-ensembles de cuisson (2,3).

3. Moule (1) selon la revendication 1 ou 2, **caractérisé en ce que** la portion d'évacuation (11) correspond à entre 10 et 25% de la paroi périphérique (10), et de préférence environ un huitième de celle-ci.

4. Moule (1) selon l'une des revendications 1 à 3, **caractérisé en ce que** la paroi périphérique (10), hors la portion d'évacuation (11), atteint le niveau du plan de fond de la plaque supérieure de cuisson (5).

5. Moule (1) selon l'une des revendications 1 à 4, **caractérisé en ce que** l'ouverture d'évacuation s'étend verticalement au jusqu'au plan de fond de la plaque supérieure de cuisson (5).

6. Moule (1) selon l'une des revendications 1 à 5, **caractérisé en ce qu'**il forme un gaufrier (1) dont chaque plaque de cuisson (4,5) comprend des dents (8) séparées les unes des autres par des gorges (9).

7. Gaufrier (1) selon la revendication 6, **caractérisé en ce que** la paroi périphérique (10), hors la portion d'évacuation (11), atteint au moins le niveau du fond des gorges (9) de la plaque supérieure de cuisson (5).

8. Gaufrier (1) selon la revendication 6 ou 7, **caractérisé en ce que** la portion d'évacuation (11) de la paroi périphérique (10) atteint un niveau égal à au moins la mi-hauteur des dents (8) de la plaque supérieure de cuisson (5).

9. Moule (1) selon l'une des revendications 1 à 8, **caractérisé en ce qu'**il comprend un bac de récupération (15) de pâte disposé hors de la chambre de cuisson, dans le prolongement de la portion d'évacuation (11).

10. Moule (1) selon la revendication 9, **caractérisé en ce que** le bac de récupération (15) est amovible.

11. Moule (1) selon la revendication 10, **caractérisé en ce que** le bac de récupération (15) comprend un bord de recouvrement (17) s'étendant depuis son côté (16) qui est adjacent à la portion d'évacuation (11) et, atteignant cette dernière.

12. Moule (1) selon la revendication 11, **caractérisé en ce que** le bord de recouvrement (17) forme le moyen de fixation du bac de récupération (15) au sous-ensemble inférieur (2) par sa mise en porte à faux entre son appui sur la coque inférieure (6) et son accrochage sous la portion d'évacuation (11).

13. Moule (1) selon la revendication 12, **caractérisé en ce que** le bord de recouvrement (17) comprend une rainure d'immobilisation (20) dans laquelle vient se loger un bord tombant (21) de la portion d'évacuation (11).

## Claims

1. Mold (1) for producing a batter-based food that swells under heat, which mold (1) comprises two cooking subassemblies (2, 3) capable of moving one with respect to the other between an open position enabling the batter to be deposited and the cooked food to be removed, and a closed position in which they define a cooking chamber, each cooking subassembly (2, 3) including a cooking plate (4, 5) that gives its shape to the food obtained by cooking the batter, the lower cooking plate (4) comprising a peripheral wall (10) that peripherally delimits the cooking chamber, that extends vertically beyond the median plane of said chamber, and that includes, on a discharge portion (11), a lowering forming a discharge opening (30) enabling the excess of expanding batter to be discharged, **characterized in that** the discharge portion (11) of the peripheral wall (10) reaches a level closer to the base plane of the upper plate (5) than to the median plane of the cooking chamber.

2. Mold (1) according to claim 1, **characterized in that** the discharge portion (11) is located on the side of the mold (1) where the link between the two cooking subassemblies (2, 3) is located.

3. Mold (1) according to claim 1 or 2, **characterized in that** the discharge portion (11) corresponds to between 10 and 25% of the peripheral wall (10) and preferably around one-eighth of it.

4. Mold (1) according to one of claims 1 to 3, **characterized in that** the peripheral wall (10), aside from the discharge portion (11), reaches the level of the base plane of the upper cooking plate (5).

5. Mold (1) according to one of claims 1 to 4, **characterized in that** the discharge opening extends vertically to the base plane of the upper cooking plate (5).

6. Mold (1) according to one of claims 1 to 5, **characterized in that** it forms a waffle maker (1) of which each cooking plate (4, 5) includes teeth (8) separated from one another by grooves (9).

7. Waffle maker (1) according to claim 6, **characterized in that** the peripheral wall (10), aside from the discharge portion (11), reaches at least the level of the base of the grooves (9) of the upper cooking plate (5).

8. Waffle maker (1) according to claim 6 or 7, **characterized in that** the discharge portion (11) of the peripheral wall (10) reaches a level equal to at least mid-height of the teeth (8) of the upper cooking plate (5).

9. Mold (1) according to one of claims 1 to 8, **characterized in that** it includes a batter recovery dish (15) arranged outside of the cooking chamber, in the extension of the discharge portion (11).

10. Mold (1) according to claim 9, **characterized in that** the recovery dish (15) is removable.

11. Mold (1) according to claim 10, **characterized in that** the recovery dish (15) includes a covering edge (17) extending from one side (16) that is adjacent to the discharge portion (11) and reaching the latter.

12. Mold (1) according to claim 11, **characterized in that** the covering edge (17) forms the means for attachment of the recovery dish (15) to the lower subassembly (2) by its projection between its contact on the lower shell (6) and its attachment under the discharge portion (11).

13. Mold (1) according to claim 12, **characterized in that** the covering edge (17) includes an immobilization groove (20) in which a falling edge (21) of the discharge portion (11) is housed.

## Patentansprüche

1. Form (1) zum Herstellen eines Nahrungsmittels auf der Basis von Teig, der sich unter Wärme ausdehnt, umfassend zwei Back-Untersysteme (2,3), die relativ zueinander zwischen einer offenen Position, welche das Einlegen des Teiges und das Herausnehmen des gebackenen Nahrungsmittels ermöglicht, und einer geschlossenen Position, in der sie eine Backkammer definieren, beweglich sind, wobei jedes der Back-Untersysteme (2,3) eine Backplatte (4,5) umfasst, die dem durch Backen des Teiges erhaltenen Nahrungsmittel ihre Gestalt gibt, wobei die untere Backplatte (4) eine Umfangswand (10) aufweist, die randseitig die Backkammer begrenzt, sich in Vertikalrichtung oberhalb der Mittelebene der Backkammer erstreckt und an einem Abgabeabschnitt (11) einen Absatz aufweist, der eine Abgabeöffnung bildet, welche die Abgabe eines Überschusses an sich ausdehnendem Teig ermöglicht, **dadurch gekennzeichnet, dass** der Abgabeabschnitt (11) der Umfangswand (10) ein Niveau erreicht, das der Bodenebene der oberen Platte (5) näher als der Mittelebene der Backkammer liegt.

2. Form (1) nach Anspruch 1, **dadurch gekennzeichnet, dass** der Abgabeabschnitt (11) an derjenigen Seite der Form (1) gelegen ist, an der sich das Gelenk zwischen den beiden Back-Untersystemen (2, 3) befindet.

3. Form (1) nach Anspruch 1 oder 2, **dadurch gekennzeichnet, dass** der Abgabeabschnitt (11) zwischen 10 und 25% der Umfangswand (10) entspricht, vorzugsweise einem Achtel derselben.

4. Form (1) nach einem der Ansprüche 1 bis 3, **dadurch gekennzeichnet, dass** die Umfangswand (10) außerhalb des Abgabeabschnitts (11) das Niveau der Bodenebene der oberen Backplatte (5) erreicht.

5. Form (1) nach einem der Ansprüche 1 bis 4, **dadurch gekennzeichnet, dass** sich die Abgabeöffnung in Vertikalrichtung bis zur Bodenebene der oberen Backplatte (5) erstreckt.

6. Form (1) nach einem der Ansprüche 1 bis 5, **dadurch gekennzeichnet, dass** sie ein Waffeleisen (1) bildet, dessen Backplatten (4,5) jeweils Zähne (8) aufweisen, welche voneinander durch Vertiefungen (9) getrennt sind.

7. Waffeleisen (1) nach Anspruch 6, **dadurch gekennzeichnet, dass** die Umfangswand (10) außerhalb des Abgabeabschnittes (11) mindestens das Niveau der Vertiefungen (9) der oberen Backplatte (5) erreicht.

8. Waffeleisen (1) nach Anspruch 6 oder 7, **dadurch gekennzeichnet, dass** der Abgabeabschnitt (11) der Umfangswand (10) ein Niveau von mindestens der halben Höhe der Zähne (8) der oberen Backplatte (5) erreicht.

9. Form (1) nach einem der Ansprüche 1 bis 8, **dadurch gekennzeichnet, dass** sie eine Teigauffangschale (15) umfasst, die außerhalb der Backkammer im Fortsatz des Abgabeabschnitts (11) angeordnet ist.

10. Form (1) nach Anspruch 9, **dadurch gekennzeichnet, dass** die Auffangschale (15) abnehmbar ist.

11. Form (1) nach Anspruch 10, **dadurch gekennzeichnet, dass** die Auffangschale (15) einen Abdeckrand (17) aufweist, der sich von ihrer Seite (16) erstreckt, die an den Abgabeabschnitt (11) angrenzt, und der Abdeckrand den Abgabeabschnitt erreicht.

12. Form (1) nach Anspruch 11, **dadurch gekennzeichnet, dass** der Abdeckrand (17) durch seine Plazierung als Überhang zwischen seiner Auflage auf der inneren Schale (6) und seinem Einhaken unter dem Abgabeabschnitt (11) das Befestigungsmittel der Auffangschale (15) an dem unteren Back-Untersystem (2) bildet.

13. Form (1) nach Anspruch 12, **dadurch gekennzeichnet, dass** der Abdeckrand (17) eine Blockierungsrille (20) aufweist, in der eine von dem Abgabeabschnitt (11) abfallende Kante (21) zu liegen kommt.
